# EUROPÄISCHE PATENTSCHRIFT

(11) **EP 1 987 340 B1**
(45) Veröffentlichungstag und Bekanntmachung des Hinweises auf die Patenterteilung: **30.03.2011**
(21) Anmeldenummer: 07721956.6
(22) Anmeldetag: 23.02.2007
(51) Int. Cl.: G01M 17/02

(54) **VERFAHREN ZUR PRÜFUNG VON REIFEN**
METHOD FOR TESTING TIRES
PROCÉDÉ DE CONTRÔLE DE PNEUMATIQUES

(30) Priorität: 23.02.2006 DE 102006008983
(43) Veröffentlichungstag der Anmeldung: 05.11.2008
(73) Patentinhaber: SEICHTER GmbH, D-30519 Hannover (DE)
(72) Erfinder: SEICHTER, Wolfgang, 30519 Hannover (DE); MEINEN, Michael, 31171 Nordstemmen (DE)
(74) Vertreter: Patentanwälte Thömen & Körner
(86) Internationale Anmeldenummer: PCT/DE2007/000344
(87) Internationale Veröffentlichungsnummer: WO 2007/095930

(56) Entgegenhaltungen:
- US-A1- 2003 196 483

## Beschreibung

Die Erfindung betrifft ein Verfahren zur Prüfung von Reifen gemäß dem Oberbegriff des Patentanspruchs 1.

Es ist bekannt, Reifen nach ihrer Herstellung zu prüfen, um die radialen und lateralen Kräfte zu messen, welche die Reifen von Kraftfahrzeugen auf eine Straße ausüben werden. Die hierzu verwendete Prüfmaschine wird in der Fachwelt als "Tire Uniformity Machine" bezeichnet, wie beispielsweise in US 2003196483 offenbart.

Bei dem bekannten Verfahren mit einer Prüfmaschine wird ein Lastrad mit einer bestimmten Kraft gegen die Lauffläche des mit Luft gefüllten Reifens gedrückt, welcher mit einer bestimmten Geschwindigkeit auf dem Lastrad abrollt. Beim Abrollen der Lauffläche des Reifens auf dem Lastrad werden die radiale Kraftschwankung und die laterale Kraftschwankung des Reifens gemessen. Diese Messung erfolgt in beiden Drehrichtungen des Reifens, einmal im Uhrzeigersinn und einmal entgegen dem Uhrzeigersinn. Danach ist der Messzyklus beendet, und es schließt sich ein neuer Messzyklus mit dem nächsten Reifen an.

Bei dem bekannten Verfahren ist eine nachteilige Eigenschaft von Reifen zu berücksichtigen, die darin besteht, dass die Reifen in Abhängigkeit ihres Materials die Eigenschaft haben, dass sich von der runden Form abweichende Flachstellen als Einprägungen auf der Reifenoberfläche bilden und dass diese Einprägungen eine gewisse Zeit erhalten bleiben. Dieser Effekt wird in der Fachwelt als "Flat Spot" bezeichnet. Wenn beispielsweise ein Kraftfahrzeug längere Zeit nicht bewegt wird, bildet sich an der Standfläche des Reifens die Einprägung in Form einer Abflachung aus. Diese Abflachung verursacht beim Abrollen des Reifens auf der Straße eine Kraftschwankung. In der Regel gleicht sich dieser Effekt aus, wenn das Kraftfahrzeug einige Kilometer gefahren ist und der Reifen entsprechend viele Umdrehungen gemacht hat.

Dieser Effekt tritt auch bei den bekannten Verfahren zur Prüfung von Reifen auf. Sowohl bei der Lasteinstellung, wenn das Lastrad gegen die Lauffläche des Reifens gedrückt wird und auch beim Wechseln der Drehrichtung prägt sich eine gewisse Abflachung und Ungleichförmigkeit auf der Lauffläche des Reifens ein. Um den dadurch bei der Messung der lateralen und radialen Kräfte hervorgerufenen unerwünschten Effekt gering zu halten, ist es bei dem verwendeten Prüfmaschinen erforderlich, vor dem jeweiligen eigentlichen Messlauf einige Umdrehungen des Reifens unter Last in den Messzyklus einzufügen. Es ist also eine gewisse Beruhigungszeit erforderlich, damit die Einprägung sich ausgleichen kann. In dieser Beruhigungszeit können keine Messungen vorgenommen werden.

Die aufgrund des beschriebenen Effektes notwendige zusätzliche Beruhigungszeit ist als nachteilig anzusehen, weil dadurch der Nutzungsgrad der Prüfmaschine eingeschränkt wird, weit während der Beruhigungszeit selbst keine Messung des Reifens vorgenommen werden kann. In diesem Zusammenhang ist zu berücksichtigen, dass eine Prüfmaschine in ihrer Anschaffung sehr teuer ist. Deshalb ist dem Benutzer einer Prüfmaschine daran gelegen, die Zeitdauer für einen Messzyklus möglichst gering zu halten, um möglichst viele Prüfungen innerhalb eines Zeitraumes von z. B. einem Jahr durchführen zu können und um einen hohen Nutzungsgrad der teuren Prüfmaschine zu erzielen. Durch die unumgängliche Beruhigungszeit wird der Nutzungsgrad allerdings erheblich eingeschränkt.

Dieser Nachteil soll durch die Erfindung beseitigt werden, die sich mit dem nachteiligen Effekt während des Drehrichtungswechsels befasst, und der die Aufgabe zugrunde liegt, ein neues Verfahren zur Prüfung von Reifen zu schaffen, welches eine Verbesserung des Nutzungsgrades der Prüfmaschine ermöglicht.

Die Lösung dieser Aufgabe erfolgt bei dem im Oberbegriff des Patentanspruchs 1 genannten Verfahren dadurch, dass die Kraft, mit der das Lastrad gegen die Lauffläche des Reifens drückt, während des Wechsels der Drehrichtung reduziert wird.

Wie voranstehend beschrieben, wird beim Wechsel der Drehrichtung eine Ungleichförmigkeit in die Lauffläche des Reifens eingeprägt. Da bei der Erfindung aber während des Wechsels der Drehrichtung die Kraft, mit der das Lastrad gegen die Lauffläche des Reifens drückt, verringert wird, ist auch die Ungleichförmigkeit auf der Lauffläche des Reifens wesentlich geringer und für die nach dem Wechsel der Drehrichtung folgende Messung in der zweiten Drehrichtung fast schon vernachlässigbar klein. Daher kann auch die notwendige Beruhigungszeit entsprechend kleiner gehalten werden. Dies erlaubt eine kürzere Zeit für den gesamten Messzyklus in der Prüfmaschine bei konstanteren Messergebnissen. Der Nutzungsgrad der Prüfmaschine wird somit erhöht.

In zweckmäßiger Ausgestaltung der Erfindung wird die Kraft, mit der das Lastrad gegen die Lauffläche des Reifens drückt, dadurch reduziert, indem der Abstand zwischen dem Lastrad und dem Reifen während des Wechsels der Drehrichtung vergrößert wird.

Wenn das Lastrad zu Beginn der Prüfung an die Lauffläche des Reifens heranbewegt wird, muss zunächst die vorbestimmte Kraft und damit die Last kurz eingeregelt werden, und wenn die vorbestimmte Kraft erreicht ist, ergibt sich daraus der gegenseitige Abstand zwischen den Achsen des Lastrades und des Reifens. Nach erfolgter Lasteinstellung zwischen Reifen und Lastrad ist der gegenseitige Abstand geeignet, um eine gleiche Last nach der Änderung des Abstandes erneut einzustellen, ohne die Kraft und damit die Last neu einzuregeln. Der Luftdruck des Reifens wird dabei konstant gehalten.

In vorteilhafter Weiterbildung wird die Kraft, mit der das Lastrad gegen die Lauffläche des Reifens drückt, dadurch reduziert, indem der Luftdruck des Reifens während des Wechsels der Drehrichtung verringert wird. Dabei wird der Abstand zwischen dem Lastrad und dem Reifen konstant gehalten. Sobald der Reifenluftdruck wieder auf den ursprünglichen Wert gebracht worden ist, ist die ursprüngliche Last für die Messung in der anderen Drehrichtung wieder hergestellt.

Als zweckmäßig hat sich erwiesen, die Kraft, mit der das Lastrad gegen die Lauffläche des Reifens drückt, während des Wechsels der Drehrichtung um ca. 80 % zu reduzieren. Für die Größe der Reduzierung ist in jedem Fall maßgeblich, dass noch eine hinreichende Reibungskraft zwischen dem Lastrad und dem Reifen vorhanden ist, um den Wechsel der Drehrichtung durchzuführen.

Nachfolgend wird die Erfindung anhand der Zeichnung beispielhaft näher erläutert. Es zeigen:
- Fig. 1: eine schematische Darstellung einer Prüfmaschine mit einem Lastrad und einem Reifen, und
- Fig. 2: den Verlauf der Kraft während des Wechsels der Drehrichtung.

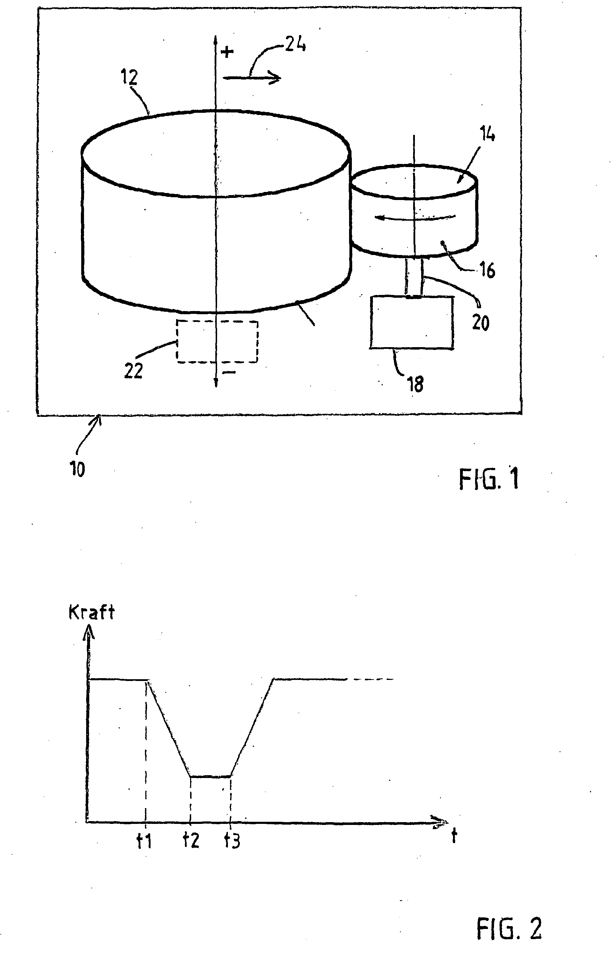

Figur 1 zeigt in einer schematischen Darstellung eine Prüfmaschine 10, mit einem Lastrad 12 und einen zu prüfenden Reifen 14. Mit der Prüfmaschine 10 werden die radialen und lateralen Kräfte gemessen, welche der Reifen 14 auf eine Straße ausüben wird. Die Messung der radialen und lateralen Kräfte erfolgt am Lastrad 12 mit Hilfe einer an sich bekannten Messvorrichtung 22.

Zur Prüfung des Reifens 14 wird das Lastrad 12 mit einer vorbestimmten Kraft in Richtung des Pfeiles 24 gegen die Lauffläche 16 des fest montierten und mit Luft gefüllten Reifens 14 gedrückt. Der Reifen 14 wird über einen nicht dargestellten Motor angetrieben und in einer ersten Drehrichtung bewegt.

Die Anpresskraft, also die Kraft, mit der das Lastrad 12 gegen die Lauffläche 16 des Reifens 14 gedrückt wird, beträgt etwa 3000 - 5000 N (Newton). Dies entspricht etwa den Bedingungen, denen der Reifen unter Berücksichtigung des Gewichtes eines Kraftfahrzeuges ausgesetzt ist. Die Geschwindigkeit, mit der sich der Reifen 14 während der Messung der radialen und lateralen Kräfte bewegt, beträgt normalerweise 60 Umdrehungen pro Minute. Infolge der Anpresskraft wird die Lauffläche 16 des Reifens 14 ca. 20 mm eingedrückt.

Bevor die Prüfung des Reifens 14 vorgenommen wird, wird der Reifen 14 über einen mit einem Luftbehälter 18 verbundenen zentralen Füllstützen 22 mit Luft gefüllt. Innerhalb von etwa einer Sekunde steigt der Luftdruck in dem Reifen von 0 auf 4 Bar, damit der Reifen 14 sicher auf seiner zugehörigen und in Figur 1 nicht näher dargestellten Felge liegt, und anschließend wird innerhalb von etwa einer halben Sekunde der Luftdruck in dem Reifen 14 auf 2 Bar gesenkt, und zwar mit einer Genauigkeit von 1 Millibar. Der Luftdruck von 2 Bar entspricht in etwa den Verhältnissen, dem der zu prüfende Reifen später in der Praxis ausgesetzt ist.

In Figur 2 ist dargestellt, dass die Kraft, mit der das Lastrad 12 gegen die Lauffläche 16 des Reifens 14 gedrückt wird, während des Wechsels der Drehrichtung reduziert wird. Zum Zeitpunkt t1 beginnt der Drehrichtungswechsel, und von diesem Zeitpunkt an wird die Kraft auf etwa 20 % des ursprünglichen Wertes verringert. Diesen Wert erreicht die Kraft zum Zeitpunkt t2, also kurz vor dem Wechsel der Drehrichtung, der zum Zeitpunkt t3 erfolgt.

Von dem Zeitpunkt t3 an beginnt der Reifen 14, sich in der anderen Drehrichtung zu bewegen, und die Kraft wird nun wieder auf den ursprünglichen Wert erhöht. Zur Reduzierung der Kraft während des Wechsels der Drehrichtung kann zum einen der gegenseitige Abstand zwischen dem Lastrad 12 und dem Reifen 14 vergrößert werden, und zum anderen ist es auch möglich, den Luftdruck des Reifens 14 während des Wechsels der Drehrichtung zu verringern. In beiden Fällen tritt die gleiche gewünschte Wirkung ein, dass die Beruhigungszeit vor der jeweiligen Messung verringert wird.

Anhand von Versuchen konnte festgestellt werden, dass sich die Zeitdauer eines üblichen Messzyklusses von 20 Sekunden um etwa 1-2 Sekunden verringern lässt. Die beim Wechsel der Drehrichtung in jedem Fall erforderliche Beruhigungszeit lässt sich in Abhängigkeit des zu prüfenden Reifens zum Beispiel von 4 Umdrehungen auf 3 Umdrehungen verringern.

Die Verringerung von etwa 1-2 Sekunden bzw, um eine Umdrehung erscheint auf den ersten Blick zwar nicht gravierend zu sein. Wenn man jedoch berücksichtigt, dass die Prüfmaschine in der Regel Tag und Nacht ohne Unterbrechung im Einsatz ist und über mehrere Jahre benutzt wird, wird der Vorteil der Erfindung sofort deutlich. Insgesamt wird somit durch das erfindungsgemäße Verfahren eine erhebliche Verbesserung des Nutzungsgrades der Prüfmaschine erzielt.

## Patentansprüche

1. Verfahren zur Prüfung von Reifen, um die radialen und lateralen Kräfte zu messen, welche die Reifen von Kraftfahrzeugen auf eine Straße ausüben werden, wobei ein Lastrad mit einer wählbaren vorbestimmten Kraft gegen die Lauffläche des mit Luft gefüllten Reifens gedrückt wird, welcher mit einer wählbaren vorbestimmten Geschwindigkeit auf dem Lastrad abrollt, wobei die radiale und laterale Kraftschwankung des Reifens gemessen wird, und wobei die Prüfung in beide möglichen Drehrichtungen des Reifens erfolgt, indem nach der ersten Prüfung die Drehrichtung des Reifens gewechselt wird und dann die zweite Prüfung vorgenommen wird, **dadurch gekennzeichnet, dass** die Kraft, mit der das Lastrad gegen die Lauffläche des Reifens drückt, während des Wechsels der Drehrichtung reduziert wird, wobei eine hinreichende Reibungskraft zwischen dem Lastrad und dem Reifen vorhanden ist, um den Wechsel der Drehrichtung durchzuführen.

2. Verfahren nach Anspruch 1, **dadurch gekennzeichnet, dass** die Kraft **dadurch** reduziert wird, indem der Abstand zwischen dem Lastrad und dem Reifen während des Wechsels der Drehrichtung vergrößert wird.

3. Verfahren nach Anspruch 1, **dadurch gekennzeichnet, dass** die Kraft **dadurch** reduziert wird, indem der Luftdruck des Reifens während des Wechsels der Drehrichtung verringert wird.

4. Verfahren nach einem der vorherigen Ansprüche 1-3, **dadurch gekennzeichnet, dass** die Kraft um ca. 80 % reduziert wird.

## Claims

1. A method for testing tyres, in order to measure the radial and lateral forces which the tyres of motor vehicles will exert on a road, wherein a load wheel is pressed with a selectable predetermined force against the tread of the tyre filled with air, which tyre rolls on the load wheel with a selectable predetermined speed, wherein the radial and lateral force variation of the tyre is measured, and wherein the test is carried out in both possible rotational directions of the tyre, in that, after the first test, the rotational direction of the tyre is changed and then the second test is performed, **characterised in that** the force with which the load wheel presses against the tread of the tyre is reduced during the change in the rotational direction, wherein a sufficient frictional force is present between the load wheel and the tyre in order to perform the change in the rotational direction.

2. The method according to Claim 1, **characterised in that** the force is reduced **in that** the distance between the load wheel and the tyre is increased during the change in the rotational direction.

3. The method according to Claim 1, **characterised in that** the force is reduced **in that** the air pressure of the tyre is reduced during the change in the rotational direction.

4. The method according to one of preceding Claims 1 - 3, **characterised in that** the force is reduced by approx. 80%.

## Revendications

1. Procédé d'essai de pneus permettant de mesurer les forces radiales et latérales que les pneus de véhicules automobiles vont exercer sur une route, procédé dans lequel une roue de charge est pressée avec une force prédéterminée sélectionnable contre la chape du pneu rempli d'air qui roule avec une vitesse prédéterminée sélectionnable sur la roue de charge, la variation des forces radiale et latérale du pneu étant mesurée et l'examen ayant lieu dans les deux directions de rotation possibles du pneu grâce au changement de la direction de rotation du pneu après le premier essai, après quoi a lieu le second essai, **caractérisé en ce que** la force avec laquelle la roue de charge est pressée contre la chape du pneu pendant le changement de la direction de rotation est réduite, une force de frottement suffisante étant existante entre la roue de charge et le pneu, afin d'effectuer le changement de la direction de rotation.

2. Procédé suivant la revendication 1, **caractérisé en ce que** la force est réduite en agrandissant l'écart entre la roue de charge et le pneu pendant le changement de la direction de rotation.

3. Procédé suivant la revendication 1, **caractérisé en ce que** la force est réduite en réduisant la pression d'air du pneu pendant le changement de la direction de rotation.

4. Procédé suivant l'une des revendications 1 à 3, **caractérisé en ce que** la force est réduite de 80% environ.
